# EUROPEAN PATENT SPECIFICATION

(11) **EP 1 612 632 B1**
(45) Date of publication and mention of the grant of the patent: **07.01.2009**
(21) Application number: 04015691.1
(22) Date of filing: 03.07.2004
(51) Int. Cl.: G05D 1/10, G05D 1/00

(54) **A system and method for in-flight control of an aerial vehicle**
System und Verfahren zur Steuerung eines Flugzeugs während des Fluges
Système et méthode de contrôle d'un aéronef en vol

(43) Date of publication of application: 04.01.2006
(73) Proprietor: SAAB AB, 581 88 Linköping (SE)
(72) Inventor: Eriksson, Jan-Erik, 587 31 Linköping (SE)
(74) Representative: Lindberg, Olle Nils Olof

(56) References cited:
- FR-A- 2 817 631
- US-A1- 2002 161 489
- US-A1- 2003 130 770
- US-B1- 6 377 875

## Description

### BACKGROUND OF THE INVENTION

The present invention relates generally to remote control of unmanned aerial vehicles. More particularly the invention relates to a system according to the preamble of claim 1 and a method according to the preamble of claim 13.

Remotely controlled unmanned aerial vehicles (UAV:s) represent an increasingly important field of aircraft technology, particularly for the military sector. UAV:s may be used to perform a large variety of military operations, such as reconnaissance flight and target combating.

Unmanned aerial vehicle missions may be based on pre-programmed flight paths. The planning of the flight paths requires precise knowledge of the airspace. However, during preprogrammed flights it is impossible to react to unforeseen events. Therefore, more difficult tasks require guidance from a remote control station, e.g. via a radio wave transmission link, whereby a "pilot" operates the aerial vehicle from a remote control. The remote control station can be located on the ground or in flight in a manned aircraft. A disadvantage with the method of remote control for operating an unmanned aerial vehicle is that the reliability of the radio wave link is essential. Loss of radio contact would bring the unmanned aerial vehicle into an uncontrolled flight phase.

One way of solving this problem is to establish an emergency route, which the aerial vehicle will follow, when the link to the remote control station is interrupted. US, 6 377 875 discloses a method for remote-controlling an unmanned aerial vehicle wherein the flight of the UAV is continued in the case of loss of contact with the remote control station. The flight is guided by means of a substitute flight program calculated on-board.

Even with the existence of emergency routes stored in the remotely controlled unmanned aerial vehicle, it is up till this point not yet possible to allow the vehicle to operate in the civil/non-restricted airspace. In order to be able to operate unmanned aerial vehicles in a wider scope of missions, this limitation must be alleviated by providing an unmanned aerial vehicle that fulfills the safety requirements for civilian airspace. This is a problem that is addressed by all industries working with development of unmanned aerial vehicle, which has not yet been solved.

Another disadvantage of the remote control for an unmanned aerial vehicle, is that the remote control station will be a safety critical system, which increases the cost for development and manufacture of aerial vehicle system, i.e the cost of the remote control station and the link connecting the ground station and the flight control system in the aerial vehicle.

### SUMMARY OF THE INVENTION

It is therefore an object of the present invention to alleviate the problems above and thus provide an improved solution for controlling an unmanned aerial vehicle that would make it possible for an unmanned aerial vehicle to operate in a non-restricted part of the airspace.

According to one aspect of the invention this object is achieved through a system for in-flight control of an aerial vehicle including an on-board flight control system, a remote control station and a read-only digital representation of a subset of the airspace. The digital representation is stored in the flight control system and the remote control station prior to each flight mission. The digital representation comprises data for an allowed airspace and at least one mission airspace within the allowed airspace. The flight control system is arranged to operate under control of the remote control station within the mission airspace.

According to a preferred embodiment of this aspect of the invention the flight control system is arranged to carry missions in an autonomous mode and wherein the missions are defined in a mission plan received from the remote control system.

An important advantage attained by the invention is the possibility to validate the data to define the allowed airspace and mission airspace in the digital representation.

In accordance with the invention, any mission plan executed by the flight control system is validated prior to the autonomous execution of the plan. The validation in the flight control system reduces the need for a high safety critical level in the ground based remote control station.

According to a further aspect of the invention this object is achieved through a method of in-flight control of an aerial vehicle involving defining in an airspace at least one allowed airspace wherein the aerial vehicle is allowed to operate and defining a mission airspace within the allowed airspace in which mission airspace the aerial vehicle is operated according to instructions in at least one mission plan stored in the flight control system.

Additional features and advantages of the invention will appear more clearly from the following detailed description of a preferred embodiment of the invention, which is given by way of non-limiting example only and with reference to the accompanying drawings.

### BRIEF DESCRIPTION OF THE DRAWINGS

The present invention is now to be explained more closely by means of preferred embodiments, which are disclosed as examples, and with reference to the attached drawings.
- Fig 1: illustrates schematically the system for control of an unmanned aerial vehicle
- Fig 2: illustrates schematically the allowed airspace in which an aerial vehicle is allowed to operate
- Fig 3: discloses a ground projection of the airspace disclosed in figure 1
- Fig 4: illustrates a mission planning in accordance with the invention
- Fig 5: illustrates a flight path

### DESCRIPTION OF PREFERRED EMBODIMENTS OF THE INVENTION

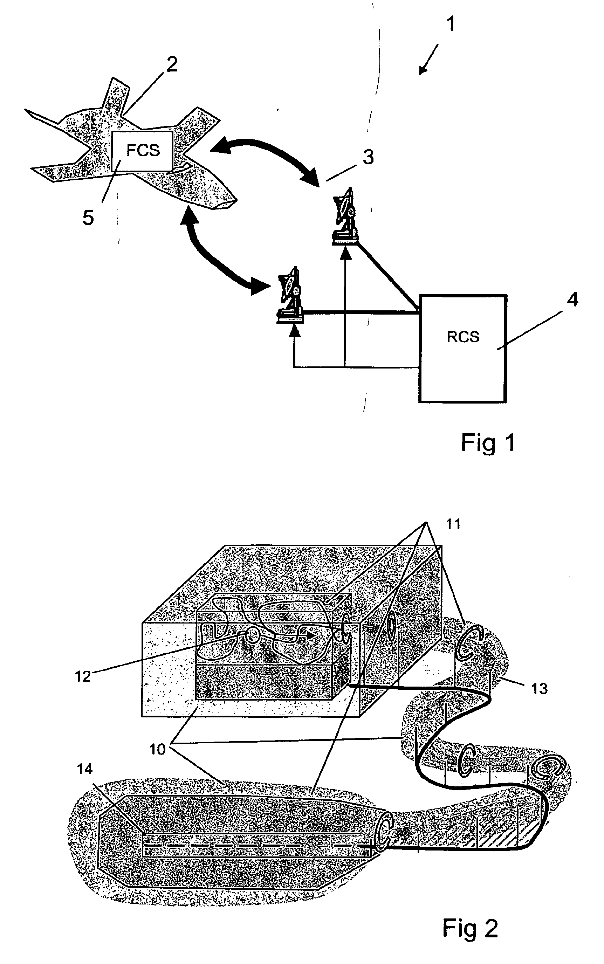

Figure 1 illustrates schematically the system 1 for control of an unmanned aerial vehicle 2 in accordance with the invention. The system 1 includes a remote control station 4 that is stationed on ground or in a manned aerial vehicle 2. The remote control station 4 communicates with an on-board flight control system 5 arranged in the aerial vehicle 2. A navigation system in the aerial vehicle 2 maintains awareness of the position of the vehicle in each instance. The remote control station 4 controls the vehicle by means of a wireless command link 3. The remote control station 4 and a base station receiver for the wireless link 3 may be co-located. The aerial vehicle 2 is set up to be able to function in an autonomous mode and to stay within a predetermined allowed airspace 10.

The allowed airspace 10 in which the aerial vehicle 2 is allowed to operate is defined. The aerial vehicle 2 is bound to operate within an allowed airspace 10 during any type of mission. The allowed airspace 10 further includes at least one mission airspace 11 within the allowed airspace 10. The mission airspace 11 defines a subspace of the allowed airspace 10 in which specified activities may be carried out by the aerial vehicle 2. Figure 2 discloses an allowed airspace 10 with a first mission airspace 11 for mission planning and second mission airspace 12 for weapon release which is a subspace of the first mission airspace 11. The aerial vehicle 2 is allowed to enter the allowed airspace 10 through a pipe or corridor 13 extending from the runway 14 to the allowed airspace 10. The allowed airspace 10 is defined through coordinates in a data base that forms a digital representation of the airspace. The coordinates stretch out the allowed airspace 10 in three dimensions.

The allowed airspace 10 and any mission airspace 11 within the allowed airspace 10 are defined by coordinates extracted from a digital representation of the airspace. The coordinates have been validated, e.g. by seeking the position defined by the given coordinate and verifying that this position is correct. The allowed airspace 10 is defined by a limited number of coordinates defining a geometrical subspace of the airspace. The geometrical subspace is usually defined to have a simple geometrical shape, e.g. a cuboids or a cylinder. The coordinates may be extracted from a digital representation of the airspace which is used for navigation purposes. The digital coordinates are stored in a read-only file so that the allowed airspace 10 and any mission airspace 11 within the allowed airspace 10 cannot be redefined during a mission. Additional safety techniques may also be used to ensure that the defined allowed airspace 10 cannot be altered after validation. Additional coordinates required for defining an allowed airspace 10 and one or more mission airspaces 11 within the allowed airspace 10 are calculated within the flight control system 5, which is a safety critical system. The unmanned aerial vehicle 2 may only require knowledge of the allowed airspace 10 in order to be considered to operate securely within the intended sub-space of the airspace.

Figure 2 also discloses the runway and a corridor 13 from the runway 14 to the mission airspace 11, which are part of the allowed airspace 10. All activities such as planning and modifying mission will take place within the mission airspace 11.

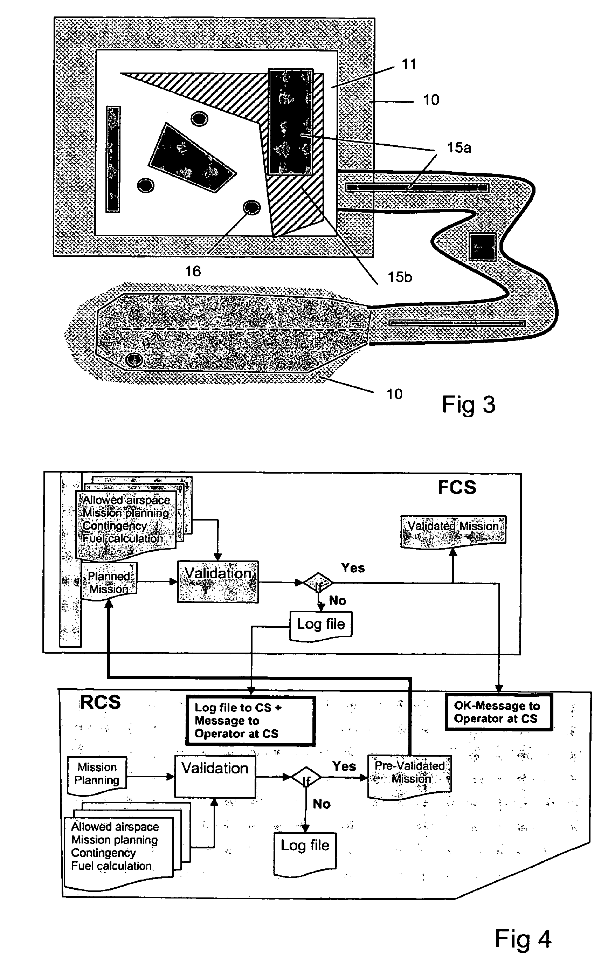

Figure 3 discloses a ground projection of the airspace disclosed in figure 2. The ground projection includes forbidden zones 16 where termination or cross over is forbidden. The zones have corresponding subspaces in the defined allowed airspace 10 which are banned for flying. The ground projection may also include termination zones 15a, 15b with different preferred levels for termination within specific areas. The zones or areas are validated prior to storage in the flight control system 5 and remote control station 4.

All missions carried out by an aerial vehicle 2 are defined by a mission plan. The mission plan normally includes a payload planning, a route planning and a communication planning. All missions also have to have contingency plan. A mission plan consists of a set of activities that combine and form a flight path. A flight path consists of a set of activities that are combined, such as:
- start
- take up and climbing to desired altitude
- fly to a number of defined waypoints or activation points and execute/carry out desired tasks
- return home or to preplanned landing destination
- approach the runway
- taxing

An operator of the aerial vehicle 2 plans the mission in the remote control station 4 or any other ground based control station prior to flight. The planning tool should preferable be configured to include a copy of the digital representation of the airspace with the defined allowed airspace 10 and mission airspaces 11. The software that validates the mission in the remote control station 4 has the same source code as the software in the flight control system 5, but the software is running on different hardware. The validation also includes contingency planning - what happens if something goes wrong. In case of e.g. failures such as loss of data 3 between the remote control station 4 and the flight control system 5, the aerial vehicle 2 needs a contingency plan, which will provide a number of pre-planned actions and flight path to be carried out for the given type of failure. The contingency planning is part of the mission planning.

All missions and flight paths with an aerial vehicle 2 will have to have a contingency planning that point out actions when failure occurs onboard the aerial vehicle 2. Actions that need to be considered in the contingency planning are among others:
- loss of prime communication link 3
- loss of main remote control station 4

The planning should also handle among other situations:
- catastrophic failures onboard the aerial vehicle 2: e.g. low oil pressure, loss of engine, loss of fuel
- total loss of communication
- loss of communication with the payload onboard the aerial vehicle 2

Contingency planning includes planning for undesired and forbidden activities or missions. This will also cover the potential risk that an aerial vehicle 2 may be hijacked and used for other purposes than the planned mission.

When the operator has finished the planning, the mission may be pre-validated in the remote control station 4. The process for mission planning and pre-validation is disclosed in Figure 4. The pre-validation will reduce the risk that the transferred mission is rejected when transferred to the aerial vehicle 2. The mission plan is stored as a set of files that are transferred to the flight control system 5 in the aerial vehicle 2 from the remote control station 4 following the pre-validation. A mission validation is executed within the flight control system 5. During the mission validation, the planned flight path is verified to lie within the boundaries of one or more mission airspaces 11. Possible weapon release is verified to be carried out within the allowed mission airspace 11 for weapon release. The validation process also includes validation of the contingency planning for the aerial vehicle 2. When the mission has been approved in the flight control system 5, the mission may be initiated in the aerial vehicle 2. According to present flight regulations, all verification and validation of flight missions must be performed within hardware in the aerial vehicle 2 or hardware equivalent to the hardware in the aerial vehicle 2 but physically separated from the vehicle, i.e., within the flight control system 5 in the aerial vehicle 2 or in other equivalent systems.

The aerial vehicle 2 takes off from a runway at a base location. The vehicle is controlled to fly along a primary route to mission airspace 11 within an allowed airspace 10. The flight of the vehicle is controlled in an autonomous mode which may be modified from the remote control station 4. In the autonomous mode, the vehicle follows a route, which is defined by a set of stored waypoints. The stored waypoints are preprogrammed in the mission-planning before take off. However, the mission may also be reprogrammed during flight and the preplanned mission may be updated or modified.

The mission to be carried out by the vehicle may at any time be updated by transmitting a new waypoint or set of waypoints to the vehicle via the wireless command link 3. The vehicle may follow the alternative route defined by these waypoints either directly after validating the waypoints or when it reaches a particular position, which represents the start of the alternative route.

The planned mission will presumably follow a standard procedure for take-off and landing. The pre-defined procedures are part of the mission planning and are stored in the flight control system 5 on the aerial vehicle 2. When the mission is initiated, the aerial vehicle 2 carries out a number of actions according to the mission plan, which can be considered as an action list for the aerial vehicle 2. In accordance with the mission plan, the aerial vehicle 2 executes a number of actions, e.g., fly to a number of waypoints (WP). The waypoints may be defined as action points (AP) or report points (RP) or given other attributes. The aerial vehicle 2 operates in an autonomous mode, executing the mission plan. If the operator does not attempt to modify the mission, the aerial vehicle 2 will execute the preplanned mission step by step from take-off to autonomous landing on a selected runway. However, the planned mission may be altered by the operator from the remote control station 4.

The aerial vehicle 2 carries out the mission as planned but the mission may be altered from the ground-based remote control station 4. Change or modification of the on-going mission may take place as long as changes of the flight path do not attempt to define a flight path that goes outside the boundaries of the mission airspace 11. The aerial vehicle 2 travels from one way-point to another. When the mission is altered, one or more way-points are included in the original mission. Other way-points may be excluded from the planned mission. Before the flight control system 5 carries out the flight path according to the altered mission, the way-points and flight-path according to the altered mission is validated in the flight control system 5. Changes from the remote control station 4 will only be allowed to affect the mission plan, if the changes are within the mission airspace 11

All waypoint changes must lie within the specified mission airspace 11 so that the flight control system 5 in the aerial vehicle 2 operates the aerial vehicle 2 within the mission airspace 11 under control of the remote control station 4. However, before allowing a change from the remote control station 4 to affect the flight path of the aerial vehicle 2, the change to the flight path is validated by the flight control system 5. The validation will be carried out to verify that the new or changed waypoint WP, the new flight polygon and the flight performance will maintain the aerial vehicle 2 within the mission airspace 11. The system may also include a request for confirmation from the operator that the change to a new running mission should be allowed before the flight control system 5 actually initiates the new mission. A change of waypoint or its attributes during a mission has to be covered by the contingency planning. If it is not part of the contingency planning, an increment to the contingency planning has to be sent to the aerial vehicle 2 together with the updated mission.

If an emergency situation occurs that cannot be predicted in the preplanned mission, the operator have a number of predefined emergency commands that may be activated. The emergency commands are predefined, validated and stored in the flight control system 5 of the aircraft. The unmanned aerial vehicle 2 will handle the emergency commands and corresponding changes to the flight path as a command from the operator. When an emergency situation occurs, the operator will by a password enter an emergency mode of the remote control station 4 . During the emergency mode the commands given may be allowed to take the aerial vehicle 2 outside of the mission airspace 11. However, the aerial vehicle 2 can never be commanded out of the allowed airspace 10. If an attempt is made to take the aerial vehicle 2 out of the allowed airspace 10, the flight control system 5 of the aerial vehicle 2 will react and maintain the vehicle within the allowed airspace 10.

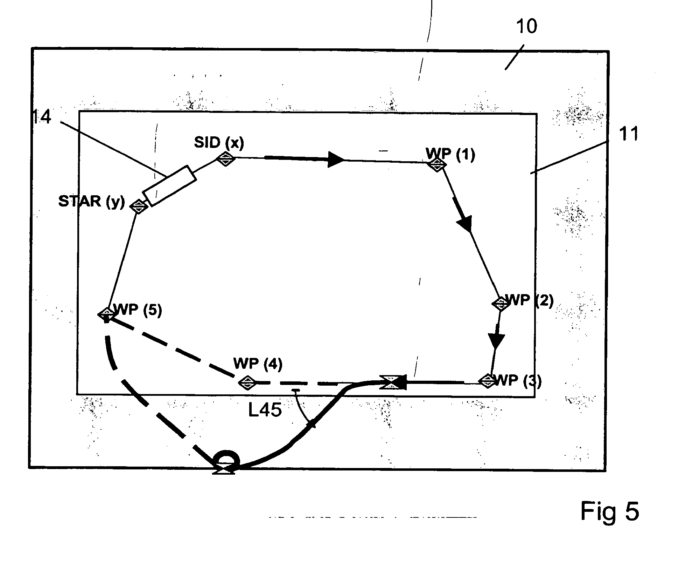

Figure 5 illustrates a flight path within the mission airspace 11 and the allowed airspace 10. The unmanned aerial vehicle 2 initiates the mission at the airport with a first given waypoint SID (Standard Instrument Departure, according to JEPPESEN and ICAO, a pre-define Take-Off procedure including clime rate, turn right/left). The aerial vehicle 2 follows a mission plan defining waypoints WP1-WP5. In situation disclosed in the figure 5, the aerial vehicle 2 follows the planned mission up till WP 3. An emergency situation occurs some time after leaving WP3. The emergency situation may e.g. be an alert from the air-traffic control to head in a given direction outside the mission airspace 11. The alert from the air-traffic control is sent to the operator of the remote control station 4, which activates a pre-defined and validated emergency command in the aerial vehicle 2. The flight control system 5 executes the emergency command allowing the aerial vehicle 2 to temporarily leave the mission airspace 11 or to stay within the mission airspace 11 depending upon the given situation. In the situation disclosed in figure 5, the aerial vehicle 2 is forced to leave the mission airspace 11 and enter the surrounding allowed airspace 10. The emergency command takes the aerial vehicle 2 to a loiter waypoint where the vehicle is maintained until the emergency situation has been cleared. Once the operator has received clearance from the air-traffic control that the emergency situation no longer exists, the aerial vehicle 2 is commanded back to the mission airspace 11 and resumes the preplanned flight path as appropriate. In the illustrated situation, the vehicle will not approach waypoint 4 due to planning of the flight polygon. The last waypoint in the mission STAR (Standard Arrival, according to JEPPESEN and ICAO, a pre-define Landing procedure including descend rate, right/left turn) defines the starting point of the landing procedure.

In order to carry out a complete flight mission the aerial vehicle 2 may travel through a multitude of allowed airspaces 10 that are adjacent. Each airspace will be defined given a simple geometrical shape that will allow easy calculation of the allowed airspace 10 and mission airspaces 11 within the allowed airspace 10. Once the validated file with digital data for defining the allowed airspaces 10 and the mission airspaces 11 have been generated, the data may not be altered in any way.

The flight control system 5 of the aerial vehicle 2 and the navigation system of the aerial vehicle 2 will be operating in accordance with standards and safety regulations for civilian aircraft. With the validated mission carried out in a validated allowed airspace 10 and mission airspace 11 it will be possible to introduce an unmanned aerial vehicle 2 in areas that previously have been banned areas for unmanned aircraft.

## Claims

1. A system for in-flight control of an unmanned aerial vehicle (2) including an on-board flight control system (5), a remote control station (4) and a read-only digital representation of a subset of the airspace, **characterized in that** the on-board flight control system (5) and the remote control station (4) each comprises the digital representation, that the digital representation comprises data for an allowed airspace (3) and at least one mission airspace (11) within the allowed airspace (3), and that the on-board flight control system (5) is arranged to operate the aerial vehicle (2) within the mission airspace (11) under control of the remote control station (4).

2. A system in accordance with Claim 1, wherein the flight control system (5) is arranged to carry out missions in an autonomous mode, the missions are defined in a mission plan received from the remote control station (4) prior to flight and wherein updates to the mission plan may be sent from the remote control system during flight.

3. A system in accordance with any of the preceding claims, wherein the mission plan received from the remote control station (4) is validated in the flight control system (5) prior to execution.

4. A system in accordance with Claim 2 or 3, wherein a flight path in the mission plan includes a number of predefined waypoints WP.

5. A system in accordance with Claim 5, wherein the data for each allowed airspace (10) and mission airspace (11) in the digital representation is validated.

6. A system in accordance with claim 6, wherein flight privileges are predetermined for each mission airspace (11).

7. A system in accordance with claim 7, wherein the digital representation further includes at second mission airspace (12) within the mission airspace (11) in which zone specific missions may be carried e.g., weapon release.

8. A system in accordance with claim 8, wherein the read-only digital representation contains data which has been validated in accordance with requirements for a high safety critical level.

9. A system in accordance with any of the preceding claims, wherein the on-board flight control system (5) is arranged to receive predefined emergency commands from the remote control station (4) which emergency commands are arranged to allow the aerial vehicle (2) to operate outside the mission airspace (11) in accordance with the predefined commands.

10. A system in accordance with any of the preceding claims, wherein the flight control system is restricted to only operate the aerial vehicle within the allowed airspace (10).

11. A system in accordance with any of the preceding claims, wherein notification is sent to the remote control station (4) if the aerial vehicle (2) approaches the boundaries of the mission airspace (11).

12. A method of in-flight control of an unmanned aerial vehicle (2) involving defining in an airspace at least one allowed airspace (10) wherein the aerial vehicle (2) is allowed to operate, **characterized in** limiting the on-board flight control system (5) to operating the aerial vehicle within the allowed airspace (10) and to further defining a mission airspace (11) within the allowed airspace (10) in which mission airspace (10) the aerial vehicle (2) is operated according to instructions in at least one mission plan stored in the flight control computer (5).

## Patentansprüche

1. System für eine Steuerung eines unbenannten Flugzeuges (2) während des Fluges mit einem Flugsteuersystem an Bord (5), einer entfernten Steuerstation (4) und einer Nur-Lese-Darstellung einer Teilmenge des Flugraumes, **dadurch gekennzeichnet, dass** das Flugsteuersystem an Bord (5) und die entfernte Steuerstation (4) beide die digitale Darstellung umfassen, dass die digitale Darstellung Daten für einen erlaubten Luftraum (3) und zumindest einen Einsatzluftraum (11) innerhalb des erlaubten Luftraumes (3) umfasst, und dass das Flugsteuersystem an Bord (5) ausgelegt ist, das Flugzeuges (2) innerhalb des Einsatzluftraumes (11) unter Steuerung der Steuerstation (4) zu operieren.

2. System nach Anspruch 1, wobei das Flugsteuersystem (5) ausgelegt ist, Einsätze in einem autonomen Modus auszuführen, wobei die Einsätze in einem Einsatzplan definiert sind, der von der entfernten Steuerstation (4) vor dem Flug empfangen wurde und worin Aktualisierungen für den Einsatzplan von dem entfernten Steuersystem während des Fluges übertragen werden können.

3. System nach irgendeinem der vorhergehenden Ansprüche, wobei der von der entfernten Steuerstation (4) empfangene Einsatzplan in dem Flugsteuersystem (5) vor der Ausführung validiert wird.

4. System nach Anspruch 2 oder 3, wobei eine Flugroute in dem Einsatzplan eine Anzahl vordefinierter Wegepunkte WP enthält.

5. System nach Anspruch 1 - 4, wobei die Daten für jeden erlaubten Flugraum (10) und Einsatzluftraum (11) in der digitalen Darstellung validiert werden.

6. System nach Anspruch 5, wobei Flugprivilegien für jeden Einsatzluftraum (11) vorbestimmt sind.

7. System nach Anspruch 6, wobei die digitale Darstellung ferner einen zweiten Einsatzluftraum (12) in den Einsatzluftraum (11) enthält, in dem zonenspezifische Einsätze ausgeführt werden können, z.B. eine Waffenentladung.

8. System nach Anspruch 7, wobei die nur lesbare digitale Darstellung Daten enthält, die in Übereinstimmung mit Erfordernissen für ein hohes Sicherheits-kritisches Niveau validiert wurden.

9. System nach irgendeinem der vorhergehenden Ansprüche, wobei das Flugsteuersystem an Bord (5) zum Empfangen vordefinierter Notfallanweisungen von der entfernten Steuerstation (4) ausgelegt ist, wobei die Notfallanweisungen ausgelegt sind, um dem Flugzeug (2) zu erlauben, in Übereinstimmung mit den vordefinierten Anweisungen außerhalb des Einsatzluftraumes (11) zu operieren.

10. System nach irgendeinem der vorhergehenden Ansprüche, wobei das Flugsteuersystem darauf beschränkt ist, das Flugzeug nur in dem erlaubten Luftraum (10) zu operieren.

11. System nach irgendeinem der vorhergehenden Ansprüche, wobei eine Benachrichtigung an die entfernte Steuerstation (4) übertragen wird, wenn das Flugzeug (2) sich den Grenzen des Einsatzluftraumes (11) nähert.

12. Verfahren für eine Steuerung eines unbenannten Flugzeuges (2) während des Fluges mit einem Definieren zumindest eines erlaubten Luftraums (10) in einem Luftraum, in dem das Flugzeug (2) erlaubt ist zu operieren, **dadurch gekennzeichnet, dass** das Flugsteuersystems an Bord (5) das Flugzeug begrenzt, in dem erlaubten Luftraum (10) zu operieren, und ferner ein Definieren eines Einsatzluftraumes (11) in dem erlaubten Luftraum (10), wobei das Flugzeug (2) in dem Einsatzluftraum (10) in Übereinstimmung mit Instruktionen in zumindest einem, in dem Flugsteuercomputer (5) gespeicherten Einsatzplan operiert wird.

## Revendications

1. Système pour le contrôle en vol d'un aéronef sans pilote (2) comprenant un système de contrôle de vol embarqué (5), une station de contrôle à distance (4) et une représentation numérique en lecture seule d'un sous-ensemble de l'espace aérien, **caractérisé en ce que** le système de contrôle de vol embarqué (5) et la station de contrôle à distance (4) comprennent chacun la représentation numérique, **en ce que** la représentation numérique comprend des données pour un espace aérien autorisé (3) et au moins un espace aérien de mission (11) dans l'espace aérien autorisé (10) ; et **en ce que** le système de contrôle de vol embarqué (5) est agencé pour commander l'aéronef (2) dans l'espace aérien de mission (11) sous le contrôle de la station de contrôle à distance (4).

2. Système selon la revendication 1, dans lequel le système de contrôle de vol (5) est agencé pour effectuer des missions dans un mode autonome, les missions sont définies dans un plan de mission reçu de la station de contrôle à distance (4) avant le vol, et dans lequel des mises à jour du plan de mission peuvent être envoyées par le système de contrôle à distance pendant le vol.

3. Système selon l'une quelconque des revendications précédentes, dans lequel le plan de mission reçu de la station de contrôle à distance (4) est validé dans le système de contrôle de vol (5) avant son exécution.

4. Système selon la revendication 2 ou 3, dans lequel une trajectoire de vol dans le plan de mission comprend un certain nombre de points de cheminement WP prédéfinis.

5. Système selon l'une quelconque des revendications précédentes, dans lequel les données pour chaque espace aérien autorisé (10) et espace aérien de mission (11) dans la représentation numérique sont validées.

6. Système selon la revendication 5, dans lequel des privilèges de vol sont prédéterminés pour chaque espace aérien de mission (11).

7. Système selon la revendication 6, dans lequel la représentation numérique comprend en outre un deuxième espace aérien de mission (12) dans l'espace aérien de mission (11) dans lequel des missions spécifiques à une zone peuvent être effectuées, par exemple, un largage d'armes.

8. Système selon la revendication 7, dans lequel la représentation numérique en lecture seule contient des données qui ont été validées conformément à des spécifications pour un niveau critique de sécurité élevé.

9. Système selon l'une quelconque des revendications précédentes, dans lequel le système de contrôle de vol embarqué (5) est agencé pour recevoir des commandes d'urgence prédéfinies de la station de contrôle à distance (4), lesquelles commandes d'urgence sont agencées pour permettre à l'aéronef (2) d'opérer à l'extérieur de l'espace aérien de mission (11) conformément aux commandes prédéfinies.

10. Système selon l'une quelconque des revendications précédentes, dans lequel le système de contrôle de vol est limité à la seule commande de l'aéronef dans l'espace aérien autorisé (10).

11. Système selon l'une quelconque des revendications précédentes, dans lequel une notification est envoyée à la station de contrôle à distance (4) si l'aéronef (2) s'approche des limites de l'espace aérien de mission (11).

12. Procédé de contrôle en vol d'un aéronef sans pilote (2) impliquant la définition dans un espace aérien d'au moins un espace aérien autorisé (10) dans lequel l'aéronef (2) est autorisé à opérer, **caractérisé en ce que** l'on contraint le système de contrôle de vol embarqué (5) à commander l'aéronef dans l'espace aérien autorisé (10), et l'on définit en outre un espace aérien de mission (11) dans l'espace aérien autorisé (10), dans lequel espace aérien de mission (11), l'aéronef (2) est commandé conformément aux instructions d'au moins un plan de mission mémorisé dans l'ordinateur de contrôle de vol (5).
